# EUROPEAN PATENT APPLICATION

(11) **EP 4 831 058 A1**
(43) Date of publication of application: **28.10.2026**
(21) Application number: 26173294.5
(22) Date of filing: 20.04.2026
(51) Int. Cl.: B64C 3/56, B64F 5/10

(54) **METHOD OF MANUFACTURING A FOLDING AIRCRAFT WING**

(30) Priority: 25.04.2025 GB 202506211
(71) Applicant: Airbus Operations Limited, Bristol BS34 7PA (GB)
(72) Inventor: SPITZER, Frank, Bristol, BS34 7PA (GB); HAND, Matthew, Bristol, BS34 7PA (GB)
(74) Representative: Abel & Imray LLP

(57) **Abstract**

A method of manufacturing a folding aircraft wing (10) is disclosed. A hinge assembly (52) of the aircraft wing (10) comprises a latch pin (70, 72) deployable through a latching lug (74, 76, 78, 80) to latch an outboard wing section (14) of the aircraft wing to the fixed wing (12). The method comprises determining a desired depth of the latching lug (74, 76, 78, 80) for the latching lug to meet a strength requirement, determining the protrusion beyond an initial outer mold line (OML) (500) of the latching lug (74, 76, 78, 80) having the desired depth, modifying the initial OML in the region of the latching lug protrusion (503) to envelop the latching lug having the desired depth; and manufacturing the aircraft wing having the modified OML (505).

## Description

### BACKGROUND OF THE INVENTION

The present invention concerns wing folding arrangements. More particularly, but not exclusively, this invention concerns a method of manufacturing a folding aircraft wing having an outer mold line which is modified to envelop a latching lug that protrudes beyond an initial outer mold line. The invention also concerns an aircraft wing having a modified outer mold line, and an aircraft comprising said wing.

It is increasingly desirable to have larger wing spans across all sizes of passenger aircraft as a means to improve fuel efficiency. Particularly for larger aircraft, however, the maximum aircraft span is effectively limited by airport operating rules which govern various clearances required when manoeuvring around the airport (such as the span and/or ground clearance required for gate entry and safe taxiway usage).

Therefore, folding wing tip devices have been introduced into passenger aircraft, where a wing tip device is movable between a flight configuration for use during flight, and a ground configuration for use during ground-based operations. In the ground configuration, the wing tip device is moved away from the flight configuration such that the span of the aircraft wing is reduced, thereby allowing use of existing gates and safe taxiway usage. In such arrangements the moveable end of the wing may sometimes be referred to as a 'folding wing tip' or 'folding wing tip device'. However, it will be appreciated that such a term may also encompass a range of sizes, and where the hinge is relatively far inboard this may equally be considered an 'outboard wing section', a 'folding wing' or a 'movable wing'. For the purposes of the present disclosure these terms are used interchangeably.

In general terms, folding wing arrangements typically comprise: a mechanical joint about which the outboard wing section moves, an actuation system for effecting the movement, and a latching system for latching the outboard wing section in the flight configuration. Some examples of these features are described below.

There are a number of mechanical joint designs for enabling rotation of a folding wing tip about an axis of rotation. The provision of interleaving lugs to form a hinge for a folding wing tip is known. Examples of such arrangements are shown in, for example, EP3560819 (Airbus Operations Limited) and US2019/0359311 (Airbus Operations GmbH). US 2020/0346740 (Boeing) and EP3360779 (Boeing) disclose a different type of joint. US 2020/0346740 discloses a folding wing pivotably coupled to a fixed wing about a hinge interface. The hinge interface comprises a pair of torque boxes through which the hinge pins pass. Each torque box has a length that is greater than its width.

A number of designs of latching system have been proposed for folding wing tips. A latching system is often required in order to latch the outer wing section to the fixed wing section, thereby holding the wing in the flight configuration. A latching system may, in some instances, also be referred to as a locking system for locking the wing in the flight configuration. A first example of a latching system is shown in EP3560819 referred to above. In EP3560819, the latching system is arranged such that when the wing tip device is in the flight configuration, locking pins are inserted through aligned holes in latching lugs, thereby locking the wing in this configuration. A second example of a latching system is shown in EP3360779, also referred to above. EP3360779 discloses a latch system comprising a plurality of latch pins, the latch pins being deployable from either side of, and into, shear plates and/or the torque boxes on the folding wing.

There tends to be limited space in the wing, particularly near the tip. There is also a trend towards designing and manufacturing aircraft wings with higher aspect ratios, which further constrains space in or near the tip. There are therefore various challenges in providing suitable joints, actuation systems and/or latching systems for folding wings, within this space-constrained environment. There may also be challenges in providing folding wing arrangements that address structural considerations (for example to provide effective load transfer across a joint) whilst also being a suitable size and/or layout to fit within the limited space available. A drawback of some known designs is that some parts of the folding wing arrangement may protrude from the initial optimal outer mold line (OML) of the wing. The design may need to be modified to avoid this (for example to compromise in other areas of the design), and/or a suitable fairing may be required to cover the protruding components. This tends to be undesirable from an aerodynamics perspective.

Aspects of the present invention seek to mitigate one or more of the above-mentioned problems. Alternatively or additionally, the present invention seeks to provide an improved wing folding arrangement.

### SUMMARY OF THE INVENTION

The present invention provides, according to a first aspect, a method of manufacturing an aircraft wing, the aircraft wing comprising: a fixed wing; an outboard wing section outboard of the fixed wing; and a hinge assembly connecting the outboard wing section to the fixed wing, wherein, the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The hinge assembly comprises: a latching lug associated with one of the outboard wing section or the fixed wing and a latch pin configured such that, when the wing is in the flight configuration, the latch pin is deployable through the latching lug to latch the outboard wing section to the fixed wing. The method comprises: establishing an initial outer mold line (OML) for the aircraft wing; determining a desired depth of the latching lug, the desired depth being at least equal to the required minimum depth of the latching lug for the latching lug to meet a strength requirement; determining the protrusion beyond the initial OML of the latching lug having the desired depth, establishing a modified OML by modifying the initial OML in the region of the latching lug protrusion, the modified OML being arranged to envelop the latching lug having the desired depth; and manufacturing the aircraft wing comprising the latching lug having the desired depth, the aircraft wing being manufactured to have the modified OML.

The latching lug may be referred to herein as the first latching lug.

The initial OML may have an aerofoil cross-section. The modified OML may therefore deviate from the aerofoil cross-section only in the region of the latching lug protrusion.

The step of manufacturing the aircraft wing comprises providing a wing skin that envelops the latching lug. The wing skin may comprise an upper wing skin portion. The wing skin may comprise a lower wing skin portion. The upper wing skin portion may form part of the one of the outboard wing section or the fixed wing. The lower wing skin portion may form part of the other one of the outboard wing section or the fixed wing. The upper wing skin portion may conform to the shape of the initial OML, in which case the lower wing skin portion may not conform to the shape of the initial OML. Alternatively, the lower wing skin portion may conform to the shape of the initial OML, in which case the upper wing skin portion may not conform to the shape of the initial OML.

The aircraft wing may comprise a further latching lug, which may be referred to herein as the second latching lug, or an opposing lug. The further latching lug may be associated with the other one of the outboard wing section or the fixed wing. The further latching lug may be provided with a hole which is spaced apart from a wing skin portion (which may be referred to herein as an opposing wing skin portion) of other one of the outboard wing section or the fixed wing by a height such that, when the wing is in the flight configuration, the hole of the further latching lug is aligned with a hole provided in the latching lug. The respective holes of the latching lug and further latching lug may be aligned along a latch line. The position of the latch line in the modified OML may be the same as the portion of the latch line in the initial OML. The latch pin may be deployable through the respective holes in the latching lug and the further latching lug to latch the outboard wing section to the fixed wing.

The method may comprise determining the height of the hole of the further latching lug required for the hole of the further latching lug to align with the hole of the latching lug in the modified OML. The method may comprise manufacturing the aircraft wing further comprising the further the latching lug having the hole provided at the height required for the respective holes of the respective latching lugs to align in the flight configuration of the wing.

Manufacturing the aircraft wing may comprise integrally forming the further latching lug and the wing skin portion of the other one of the outboard wing section or the fixed wing. The further latching lug may extend from the wing skin portion of the other one of the outboard wing section or the fixed wing section in a region where the modified OML differs from the initial OML. The further latching lug may therefore extend from the wing skin portion of the other one of the outboard wing section or the fixed wing section in a region where the wing skin does not follow an aerofoil profile.

The latching lug may be an inboard latching lug associated with the fixed wing; the inboard latching lug may extend downwardly from an upper wing skin portion on the fixed wing. In this case, the further latching lug may be an outboard latching lug associated with the outboard wing section; the outboard latching lug may extend upwardly from the lower wing skin on the outboard wing section.

Alternatively, the latching lug may be an outboard latching lug associated with the outboard wing section; the outboard latching lug may extend upwardly from the lower wing skin on the outboard wing section. In this case, the further latching lug may be an inboard latching lug associated with the fixed wing; the inboard latching lug may extend downwardly from an upper wing skin portion on the fixed wing.

The aircraft wing may comprise a leading edge and a trailing edge. The latching lug may be positioned closer to the trailing edge than to the leading edge. The latching lug may be an aft latching lug. There may also be a fore latching lug associated with the one of the outboard wing section or the fixed wing. The fore latching lug being positioned closer to the leading edge than the aft latching lug.

The aircraft wing may comprise a joint assembly which comprises the hinge assembly. The joint assembly may comprise an inboard structural fitting fixedly connected to a tip of the fixed wing and an outboard structural fitting fixedly connected to the outboard wing section. The latching lug may form part of one of inboard structural fitting or the outboard structural fitting. The step of manufacturing the aircraft wing may comprise manufacturing the joint assembly.

The latching lug may be an inboard latching lug forming part of the inboard structural fitting; and may extend downwardly from an upper wing skin portion of the second structural fitting. In this case, the further latching lug may be an outboard latching lug forming part of the outboard structural fitting; the outboard latching lug may extend upwardly from a lower wing skin portion forming part of the outboard wing section; the outboard latching lug may be integrally formed with the lower wing skin portion in a region where the lower wing skin portion deviates from the initial OML. The step of manufacturing the joint assembly may comprise the step of integrally forming the outboard latching lug and the lower wing skin portion. The step of manufacturing the joint assembly may comprise the step of integrally forming the inboard latching lug and the upper wing skin portion.

Alternatively, the latching lug may be an outboard latching lug forming part of the outboard structural fitting; the outboard latching lug may extend upwardly from a lower wing skin portion forming part of the outboard structural fitting. In this case, the further latching lug may be an inboard latching lug forming part of the inboard structural fitting; the inboard latching lug may extend downwardly from an upper wing skin portion forming part of the inboard structural fitting; the inboard latching lug may be integrally formed with the upper wing skin portion in a region where the upper wing skin portion deviates from the initial OML.

According to a second aspect, the present invention provides a method of manufacturing an aircraft wing, the aircraft wing comprising: a fixed wing; an outboard wing section outboard of the fixed wing; and a hinge assembly connecting the outboard wing section to the fixed wing, wherein, the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. One of the outboard wing section or the fixed wing comprises a latching lug configured such that a latch pin can be deployed through the latching lug to secure the outboard wing section in the flight configuration. The method comprises: defining an outer mold line (OML) for the aircraft wing; calculating the dimensions of the latching lug required for the latching lug to meet minimum strength criteria; modifying the OML to encompass the latching lug having the dimensions required to meet the minimum strength criteria; and manufacturing the aircraft wing having the latching lug having the dimensions required to meet the minimum strength criteria to within the modified OML.

According to a third aspect, the present invention provides an aircraft wing, comprising: a fixed wing; and an outboard wing section outboard of the fixed wing; and the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced, wherein the wing further comprises a latch assembly located in the fixed wing and a set of latching lugs, the latch assembly and the latching lugs being configured such that when the wing is in the flight configuration, the latching lugs extends fore and aft of the latch assembly such that the latch assembly is between the latching lugs. In the flight configuration, at least one latching lug protrudes beyond an aerofoil-profiled outer mold line (OML) of the aircraft wing and is encompassed by a modified OML that deviates from the aerofoil-profiled OML, wherein the modified OML is defined by the wing skin, said wing skin in the modified OML being integral with surrounding wing skin following the aerofoil-profiled OML.

The hinge assembly may comprise a set of interleaving hinge lugs and a hinge pin extending through the interleaving hinge lugs, thereby forming a hinge. The hinge assembly may comprise a fore set of interleaving hinge lugs and an aft set of interleaving hinge lugs; a fore hinge pin and an aft hinge pin, extending through the fore and aft sets of interleaving hinge lugs respectively, thereby forming a hinge. An actuator may be located between the fore set of hinge lugs and the aft set of hinge lugs, the actuator being configured to rotate the outboard wing section about the hinge axis to move the wing between the flight configuration and the ground configuration.

Unless otherwise specified, the terms 'fore' and 'aft' are used herein to specify relative locations, along a direction parallel to the hinge axis. Unless otherwise specified, there terms 'inboard' and 'outboard' are used herein to specify relative locations, along a direction perpendicular to the hinge axis.

In some embodiments, the hinge axis may be toed in or out. In preferred embodiments, the hinge axis may be orientated substantially in a line-of-flight direction. In such embodiments the terms fore/aft and inboard/outboard are also commensurate with the relative locations, in the line-of-flight direction and the spanwise direction respectively.

The, or each, set of interleaving hinge lugs may comprise a hinge lug associated with the fixed wing or the outboard wing section, received in a clevis associated with the other of the fixed wing or the outboard wing section. The fixed wing may comprise a fore set of hinge lugs and an aft set of hinge lugs, through which the hinge axis extends. The outboard wing section may comprise a fore set of hinge lugs, interleaving with the fore set of hinge lugs of the fixed wing to form the fore set of interleaving hinge lugs. The outboard wing section may comprise an aft set of hinge lugs, interleaving with the aft set of hinge lugs of the fixed wing to form the aft set of interleaving hinge lugs. Each set of interleaving hinge lugs may comprise a series of aligned holes through which the respective hinge pin is received. The hinge pins may link the fixed wing and the outboard wing section, to facilitate rotational movement of the outboard wing section about the hinge axis.

The latch assembly may comprise an aft latch pin, deployable in the aft direction to latch an aft outboard latching lug, and a fore latch pin, deployable in a forward direction, to latch a fore outboard latching lug. Aspects of the present invention recognise that locating a latch assembly between fore and aft outboard latching lugs may be especially space-efficient. For example, latch pins may then be deployed in opposing fore and aft directions enabling the latch assembly to be located towards the centre (mid-chord) of the wing.

The latch assembly may be operable to deploy the latch pins from a retracted state (in which movement of the wing between the flight and ground configurations is permitted) and a deployed state (in which the latch pins inhibit movement of the wing between the flight and ground configurations). The latch pins may be deployed in opposing directions (fore/aft), but may both be orientated parallel to the hinge axis. In some embodiments the fore and aft latch pins may be arranged parallel to one another but axially offset from one another. This may be required where there is insufficient space to accommodate the combined length of both pins between the outboard latching lugs. In some embodiments (for example where the spacing between the arms is sufficient), the fore and aft latch pins may be coaxial.

The latch assembly may be in the form of a latching unit. The latching unit may comprise a housing and the two latch pins. When the latch pins are in a retracted state the latch pins may be located substantially within the housing. When the latch pins are in an extended state, the latch pins may protrude from the housing. The latch pins may be deployable between the retracted and the extended states. Providing the latch assembly as a latching unit may be beneficial to keep a low part-count and/or to facilitate easy fitting/removal of the latch assembly into/from the wing.

The fixed wing may comprise a plurality of latching lugs. The fixed wing may comprise a plurality of aft outboard latching lugs. The fixed wing may comprise a plurality of fore outboard latching lugs.

In principle each latch pin may be deployable to be received in an outboard latching lug only. More preferably, each latch pin is deployable to be received in both an outboard latching lug (associated with the outboard wing section) and an inboard latching lug (associated with the fixed wing).

The fixed wing may comprise a fore inboard latching lug (and more preferably a plurality of fore inboard latching lugs). The fixed wing may comprise an aft inboard latching lug (and more preferably a plurality of aft inboard latching lugs). The inboard latching lugs may be arranged such that when the wing is in the flight configuration the fore inboard latching lug(s) are adjacent (and more preferably interleave with) the fore outboard latching lug(s), and the aft inboard latching lug(s) are adjacent (and more preferably interleave with) the aft outboard latching lug(s). This may enable the aft latch pin to be deployed through aligned holes in all of the aft outboard latching lug(s) and aft latch receiver(s), and the fore latch pin to be deployed through aligned holes in all of the fore outboard latching lug(s) and aft latch receiver(s). Such an arrangement has been found to be beneficial, as any shear loads across the latch pin may be relatively evenly distributed. Furthermore, such an arrangement tends to allow the latching function to be maintained in the unlikely event of a failure of a latch pin. For example, should the latch pin fail at one location along the pin between an outboard latching lug and an adjacent receiver, the pin will nonetheless extend through another outboard latching lug and adjacent receiver and it will therefore still provide the latching function.

At least one of the aft inboard latching lugs may be an extension of the aft set of hinge lugs on the fixed wing. At least one fore inboard latching lug may be an extension of the fore set of hinge lugs on the fixed wing.

The aft outboard latching lug may be an extension of one of the hinge lugs in the aft set of hinge lugs of the outboard wing section. The fore outboard latching lug may be an extension of one of the hinge lugs in the fore set of hinge lugs of the outboard wing section.

Embodiments in which the inboard latching lugs and/or the outboard latching lugs are extensions of respective hinge lugs, have been found to enable a compact arrangement and/or enable effective load transfer.

The outboard latching lugs may extend in a direction perpendicular to the hinge axis. The inboard latching lugs may extend in a direction perpendicular to the hinge axis.

The latch assembly may be located inboard of the hinge axis. The latch pins may be moveable along a latch line. The latch line may be parallel to the hinge axis. The latch line may be offset inboard of the hinge axis. The latch line may be located at least 100mm inboard, more preferably at least 150mm inboard, and more preferably at least 250mm inboard, of the hinge axis.

The fixed wing may comprise a tip with a first structural fitting fixedly connected thereto. The outboard wing section may comprise a root with a second structural fitting connected thereto. The first structural fitting may comprise the fore and aft sets of hinge lugs of the fixed wing. The second structural fitting may comprise the fore and aft sets of hinge lugs of the outboard wing section. By providing first and second structural fittings, embodiments of the invention may be provided without necessarily requiring substantial modification to the structural components at the tip/root of the fixed wing/outboard wing section. For example, the structural fittings may be fixable to conventional wing structures in the fixed wing/outboard wing section, such as spars and ribs.

The first structural fitting may comprise a recess configured to receive the latch assembly. The length of the recess may be less than the distance between the fore and aft outboard latching lugs. In embodiments in which the fixed wing comprises latch receivers, the latch receivers may be formed in the first structural fitting. The recess is preferably located between the fore and aft sets of hinge lugs. The recess is preferably located between the fore and aft latch receivers. Providing a recess for the latch assembly may facilitate the correct location and fitting of the latch assembly.

The recess may be located outboard of the tip rib of the fixed wing. The latch assembly may therefore be accessible without necessarily requiring removal of the covers on the fixed wing.

The actuator may be attached between the first structural fitting and the second structural fitting. The attachment may be such that rotation of the actuator rotates the second structural fitting, relative to the first structural fitting. The actuator is attached between the fore sets of hinge lugs and the aft sets of hinge lugs. In preferred embodiments of the invention, the actuator and the hinge axis are coaxial.

The actuator may be driven by a remote motive force (for example the actuator may be driven by a remote motor, via a transmission). The actuator may be a rotary actuator. The actuator may be a geared rotary actuator (GRA). The use of a GRA has been found to be especially beneficial in the context of this arrangement as it is especially space-efficient and tends to be a good fit between the sets of interleaving hinge lugs.

The actuator may be located between the fore and aft sets of interleaving hinge lugs. Accordingly, the actuator may be located at a first axial position along the hinge axis, with the fore set of interleaving hinge lugs being located fore of the first location and the aft set of interleaving hinge lugs being located aft of the first location. The latch assembly is located inboard of the actuator. The latch assembly is preferably inboard of the actuator but at the same first axial position along the hinge axis. For example, the actuator and the latch assembly may be centred at a common first axial position along the hinge axis.

The fixed wing may comprise a front spar and a rear spar, the front spar extending within a front spar plane and the rear spar extending within a rear spar plane. Both the latch assembly and the actuator are preferably located between the front and rear spar planes (for example aft of the front spar plane and fore of the rear spar plane). Such an arrangement may be space efficient because it enables these relatively large components to be located in the most voluminous part of the wing. This may also enable any routing of systems that support the latch assembly and/or actuator, to be achieved without necessarily requiring any penetration of the spars.

The wing, in the flight configuration, may define a wing plane containing the chord of the wing. Both the latch assembly and the actuator may be located at substantially the same height within the wing plane. For example the vertical offset of the latch assembly and the actuator, relative to the wing plane, may be less than 300mm and preferably less than 200m. Such an arrangement may be space efficient because it enables these relatively large components to be located in the most voluminous part of the wing, and it may help mitigate any negative impact on the OML of the wing.

It may be that the outboard section of the wing is configured to be extended out to a position in which the wing is in the flight configuration, and is configured to be retracted to a position in which the wing is in the ground configuration and the total length of the wing is reduced. In the flight configuration the trailing edge of the outboard wing section may be a continuation of the trailing edge of the fixed wing. The leading edge of the outboard wing section may be a continuation of the leading edge of the fixed wing, such that there is a smooth transition from the fixed wing to the outboard wing section. It will be appreciated that there may be a smooth transition, even where there are changes in sweep or twist at the fixed wing/ outboard wing section. However, there are preferably no discontinuities at the junction between the fixed wing and outboard wing section.

The outboard wing section may be a wing tip extension, for example a generally planar tip extension. In other embodiments, the outboard wing section may comprise, or consist of, a non-planar device, such as a winglet. The outboard wing section may include, for example, trailing edge moveable devices for control (ailerons) or leading edge devices for stall protection, such as slats or droop nose devices.

When the wing is in the ground configuration (e.g. with the outboard wing section retracted), the aircraft incorporating the wing, may be unsuitable for flight. For example, the outboard wing section may be aerodynamically and/or structurally unsuitable for flight in the ground configuration.

With the push for higher and higher aspect ratio wings, the embodiments of the invention are well suited to use in such wings (i.e. long narrow wings), which typically have confined space in which to mount equipment. The aspect ratio of a wing is defined as the ratio of its span to its mean chord and equal to the square of the span divided by the wing area. The aspect ratio of the wing may be greater than 8, possibly greater than 9, and optionally 10 or higher. In some embodiments it may be that the aspect ratio of the wing is 11 or 12 or more.

The maximum depth of the wing (height between upper and lower wing covers) at the hinge axis may be less than 50cm, and in some embodiments may be less than 35cm. The depth of the wing at the hinge axis may be less than 32.5cm, preferably less than 27.5cm, and optionally less than 22.5cm.

The length of the outboard wing section of the aircraft wing may be more than 3m, preferably more than 4m, and more preferably more than 5m.

The span ratio of the fixed wing relative to the outboard wing section may be such that the fixed wing comprises at least 60%, 70%, 80%, 90%, or more, of the overall span of the wing. The span ratio of the fixed wing relative to the outboard wing section may be such that the outboard wing section comprises at least 10%, 20%, 30%, 40%, or more, of the overall span of the wing.

The hinge axis of the aircraft wing may be more than 12.5m away from the root of the wing, preferably more than 15m away, and optionally more than 17m away.

The fore and aft outboard latching lugs may be associated with the outboard wing section, and the latch assembly may be located on the fixed wing. Such an arrangement may be beneficial because the latch assembly remains fixed during movement of the outboard wing section, and the outboard latching lugs may be rotated with the outboard wing section such that they do not contribute to the wing span once the wing is in the ground configuration. However, in further aspects of the invention, it may be that the location of these features is reversed. In such arrangements the latch assembly may be located outboard of the actuator, in the outboard wing section; the fore and aft outboard latching lugs may be associated with the fixed wing. The layout of other features of the invention may also be adjusted accordingly.

According to a further aspect of the invention there is also provided an aircraft including the aircraft wing according to the third aspect of the invention.

The aircraft may be a passenger aircraft. The passenger aircraft preferably comprises a passenger cabin comprising a plurality of rows and columns of seat units for accommodating a multiplicity of passengers. The aircraft may have a capacity of at least 20, more preferably at least 50 passengers, and optionally more than 75 passengers. The aircraft may be a commercial aircraft, for example a commercial passenger aircraft, for example a single aisle or twin aisle aircraft. The aircraft need not be configured for carrying passengers, but could for example be an aircraft of an equivalent size configured for cargo and/or used on a non-commercial basis. The aircraft may have a maximum take-off weight (MTOW) of at least 20 tonnes, optionally at least 40 tonnes, and possibly 50 tonnes or 100 tonnes or more. The aircraft may have an operating empty weight of at least 20 tonnes, optionally at least 30 tonnes, and possibly about 40 tonnes or more.

In the flight configuration, the span of the aircraft may exceed an airport compatibility limit. In the ground configuration the span may be reduced such that the span (with the wing in the ground configuration) is less than, or substantially equal to, the airport compatibility limit. The airport compatibility limit is a span limit (for example relating to clearance restrictions for buildings, signs, other aircraft). The compatibility limit is preferably a gate limit.

It may be that the span of the aircraft in the ground configuration is less than a wing span limit and that the span of the aircraft wing in the flight configuration is greater than the wing span limit. The wing span limit may be 36m. The wing span limit may be 52m. The wing span limit may be 65m. The wing span limit may be 80m. It may be that the span of the aircraft wing is at least 8 metres shorter (possibly 10 metres or more shorter) in the ground configuration than in the flight configuration.

It may be that the outboard wing section undergoes a rotation of more than 45 degrees, preferably more than 60 degrees, and optionally more than 75 degrees as it moves from the ground configuration to the flight configuration. A higher amount of rotation may enable a greater difference in wing span as between the ground configuration and the flight configuration.

The mean chord of the wing may be less than 6.5m, less than 5m, and more preferably less than 4.5m. The chord of the wing at the interface between the fixed wing and the outboard wing section may be less than 5m. For example, for an aircraft having a wing span in the ground configuration of between 65m and 80m, the chord of the wing at the interface between the fixed wing and the outboard wing section may be greater than 3m but less than 5m. For an aircraft having a wing span in the ground configuration of 65m or less, the chord of the wing at the interface between the fixed wing and the outboard wing section may be less than 4m, and may optionally be less than 3m.

According to a further aspect of the invention there is also provided a method of designing an aircraft wing, the aircraft wing comprising: a fixed wing; an outboard wing section outboard of the fixed wing; and a hinge assembly connecting the outboard wing section to the fixed wing, wherein, the aircraft wing is configurable between: a flight configuration for use during flight and a ground configuration for use during ground-based operations, in which ground configuration the outboard wing section is rotated away from the flight configuration about a hinge axis of the hinge assembly, such that the span of the aircraft wing is reduced. The hinge assembly comprises: a latching lug associated with one of the outboard wing section or the fixed wing and a latch pin configured such that, when the wing is in the flight configuration, the latch pin is deployable through the latching lug to latch the outboard wing section to the fixed wing. The method comprises: establishing an initial outer mold line (OML) for the aircraft wing; determining a desired depth of the latching lug, the desired depth being at least equal to the required minimum depth of the latching lug for the latching lug to meet a strength requirement; determining the protrusion beyond the initial OML of the latching lug having the desired depth, establishing a modified OML by modifying the initial OML in the region of the latching lug protrusion, the modified OML being arranged to envelop the latching lug having the desired depth.

It will of course be appreciated that features described in relation to one aspect of the present invention may be incorporated into other aspects of the present invention. For example, an aircraft wing manufactured according to the method of the first or second aspects of the invention may incorporate any of the features described with reference to the aircraft wing according to the third aspect of the invention.

### DESCRIPTION OF THE DRAWINGS

Embodiments of the present invention will now be described by way of example only with reference to the accompanying schematic drawings of which:
Figure 1 shows an aircraft wing comprising a fixed wing and an outboard wing section according to an embodiment of the invention;
Figure 2 shows an aircraft comprising an aircraft wing as shown in Figure 1;
Figures 3a and 3b are isometric views showing the joint between the fixed wing and the outboard wing section of Figure 1;
Figure 4 is a plan view of the portion of the aircraft wing in Figure 3a;
Figure 5 shows the structural fitting of the fixed wing in Figure 4 together with the GRA and the LLU, as viewed from below;
Figure 6 shows the structural fitting of Figure 5 but with the GRA and the LLU removed;
Figure 7 shows the structural fitting of the outboard wing section;
Figure 8 is a cross-sectional view of an aircraft wing in the region of the joint assembly illustrating a situation in which the required depth of the outboard latching lugs results in the outboard latching lugs protruding beyond the OML;
Figure 9 is a flow chart showing the steps of manufacturing an aircraft wing according to an embodiment of the invention;
Figure 10 is a schematic drawing of an initial OML shown with lugs protruding from the initial OML;
Figure 11a is a schematic drawing illustrating the height and depth dimensions of an inboard latching lug;
Figure 11b is a schematic drawing illustrating the height and depth dimensions of an outboard latching lug;
Figure 12 is a schematic drawing showing the initial OML of Figure 10 with a modified portion to accommodate lugs protruding from the OML; and
Figure 13 is a schematic drawing of a modified OML, which is a combination of the initial OML and modified portion shown in Figure 12.

### DETAILED DESCRIPTION

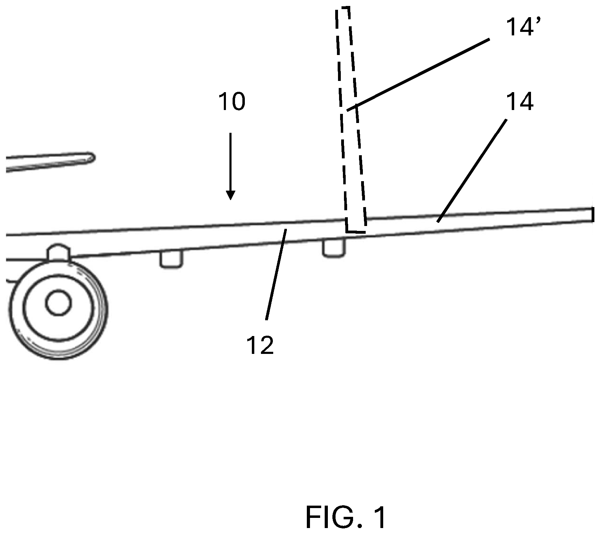

Figure 1 is a schematic image, showing an aircraft wing 10 comprising a fixed wing 12 and an outboard wing section 14, which forms a folding wing tip section. Figure 1 is a composite image and shows the aircraft wing 10 both in a ground configuration (shown in broken line) and in a flight configuration (shown in solid line). It will be seen in the ground configuration the outboard wing section 14' is folded up to be vertical (or near vertical) so that the span of the aircraft wing 10 is reduced compared to the flight configuration. A longer wing may provide the aircraft with an increased lift, better fuel efficiency, reduce the drag, and provide more stability in flight. However, there are size limitations imposed on current airport gates (gate limits), which restrict the wingspan of an aircraft to a certain length. Gate limits may be categorised by reference to an Aerodrome Reference Code letter according to the classification given by ICAO (the International Civil Aviation Organization). Example gate limits are code C (total wing span must be less than 36m), code D (total wing span must be less than 52m), code E (total wing span must be less than 65m), and code F (total wing span must be less than 80m). To overcome this, folding wings may be used, to improve the aspect ratio of the wings during flight, whilst not surpassing the gate limits. In this embodiment, the aircraft has a wing span of about 45m in the flight configuration but with a wing span of just under 36m in the ground configuration (making the aircraft suitable for use in airports having code C compatible gates (which set a limit on maximum wing span of 36m). The outboard wing section 14 is about 5m long to achieve this benefit. The chord of the wing at the interface between the fixed wing 12 and the outboard wing section 14 is about 1.9m and the mean aerodynamic chord (MAC) of the wing is about 4.2m. The maximum depth of the wing 10 (height between upper and lower wing covers) at the junction between the outboard wing section 14 and the fixed wing is about 20cm. The aspect ratio of the wing 10 is about 14.

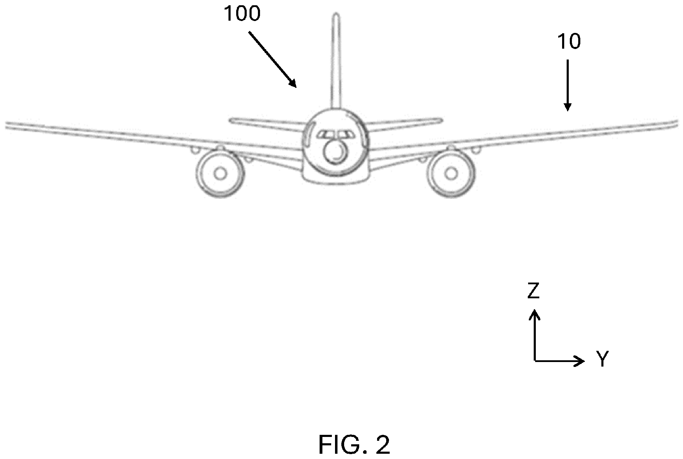

Figure 2 shows the aircraft wing 10 of Figure 1 as part of an aircraft 100. In Figure 2 the aircraft wing 10 is in a flight configuration, where the outboard wing section 14 has been extended from the ground configuration shown in Figure 1 (i.e. rotated to a position in which the outboard wing section 14 forms a continuation of the aerodynamic exterior surface profile of the fixed wing 12). Thus, as shown in Figure 2, the aircraft wing 10 in the flight configuration forms one continuous shape, the outboard wing section 14 extending the general shape of the fixed wing 12.

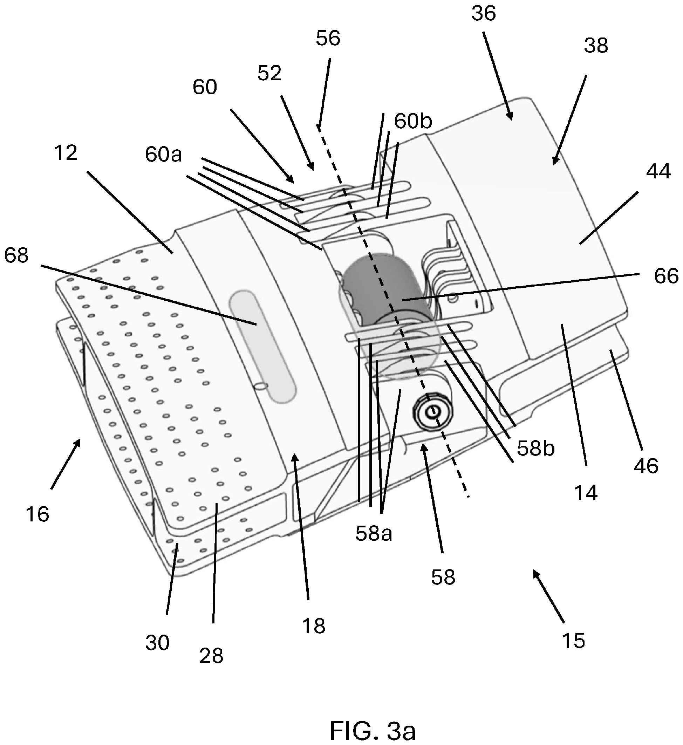

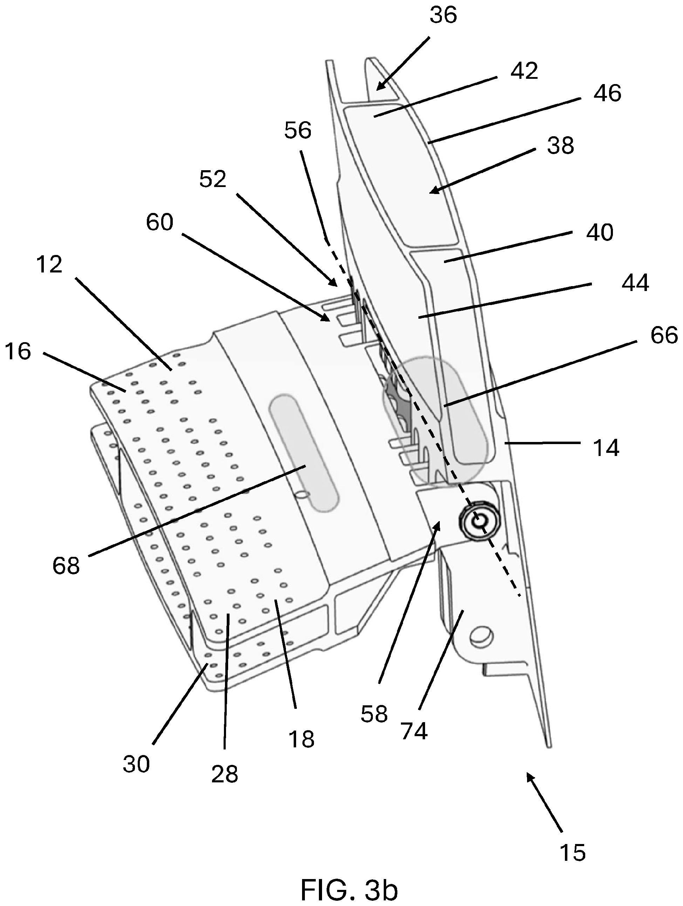

Aircraft having wings with a fixed portion and a foldable outer section are known *per se.* However, the first embodiment of the invention comprises a novel arrangement at the joint between the fixed wing 12 and the outboard wing section 14 as will now be described in more detail with reference to Figures 3 to 7.

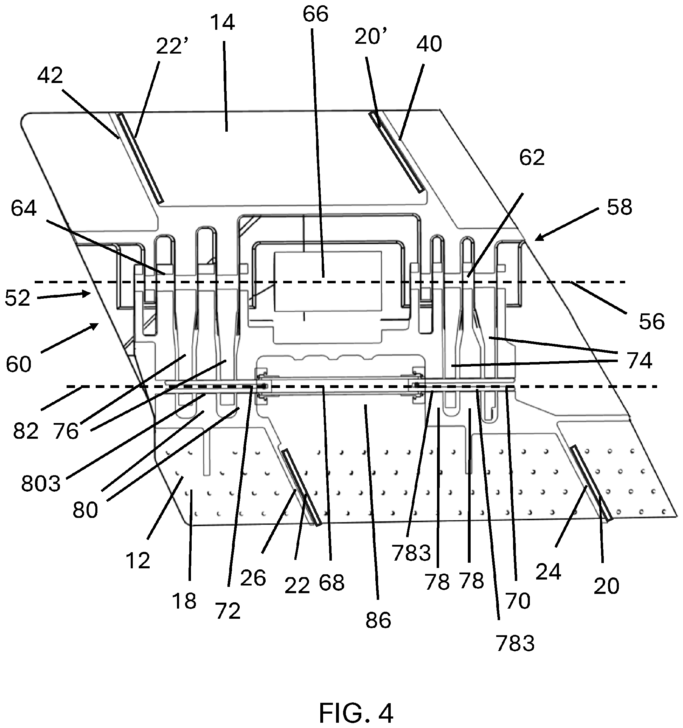

Figures 3a and 3b are isometric views showing the joint assembly 15 between the fixed wing 12 and the outboard wing section 14, when the wing is in the flight configuration (see Figure 3a) and the ground configuration (see Figure 3b). Various components, such as the wing covers, have been omitted for clarity. Figure 4 is a plan view of the arrangement in Figure 3a, as seen from above but canted with the wing dihedral.

Referring first to Figures 3a, 3b and 4, the fixed wing 12 comprises a tip 16 with a first structural fitting 18 connected thereto. The tip 16 of the fixed wing 12 comprises a front spar 20 and a rear spar 22 (the ends of which are shown in Figure 4). The structural fitting 18 connects to the front and rear spars 20, 22 via splined fittings 24, 26 (see Figure 4). The splined fittings 24, 26 are enclosed by upper and lower flanges 28, 30 which are themselves attached to the rib feet of the tip rib (not shown). This attachment is such that the structural fitting 18 is fixedly attached to the tip 16 of the fixed wing 12.

The outboard wing section 14 comprises a root 36 with a second structural fitting 38 connected thereto. The second structural fitting 38 is connected to the root 36 of the outboard wing section 14 in a similar manner to the corresponding structural fitting 18 at the tip of the fixed wing 12, namely: the second structural fitting 38 connects to the front and rear spars 20', 22' of the outboard wing section 14, via splined fittings 40, 42 (see Figure 4). The splined fittings 40, 42, are enclosed by upper and lower flanges 44, 46 which are themselves attached to the rib feet of the root rib (not shown). This attachment is such that the second structural fitting 38 is fixedly attached to the root 36 of the outboard wing section 14.

The fixed wing 12 and the outboard wing section 14 are connected via a hinge assembly 52. The hinge assembly 52 allows rotation of the outboard wing section 14, about a hinge axis 56, between the position shown in Figure 3a (when the wing is in a flight configuration), and the position shown in Figure 3b, when the wing is in the ground configuration.

In the first embodiment, the hinge axis 56 is substantially parallel to the line of flight (and thus substantially parallel to the X-direction, aligned with the longitudinal axis of the fuselage of the aircraft). In the description below, various aspects of the design are described with reference to their location in the wing. The fore-aft direction is along the X axis. The inboard-outboard direction is in the Y-axis, running perpendicular to the X-direction and extending spanwise, perpendicular to the longitudinal axis of the aircraft.

The hinge assembly 52 comprises both a fore set 58 and aft set 60 of interleaving hinge lugs. Hinge pins 62, 64 extend through aligned holes in these fore 58 and aft 60 sets of interleaving hinge lugs respectively, thereby forming a hinge. The holes are bushed to provide a suitable seating for the hinge pins 62, 64 and thus provide a suitable means for enabling maintenance and repair of the hinge assembly 52.

The second structural fitting 38, of the outboard wing section 14, comprises a set of three fore hinge lugs 58b interleaving with a corresponding set of four fore hinge lugs 58a on the first structural fitting 18, of the fixed wing 12 (in some of the Figures only some of the hinge lugs may be labelled for clarity). Similarly, the second structural fitting 38 of the outboard wing section 14 comprises a set of three aft hinge lugs 60b interleaving with a corresponding set of four aft hinge lugs 60a on the first structural fitting 18 of the fixed wing 12. The fore hinge lugs 58a, 58b and aft hinge lugs 60a, 60b of the structural fittings 18, 38 are integrally formed with the respective structural fittings 18, 38.

The fore hinge lugs 58a of the structural fitting 18 of the fixed wing 12 are connected to the fore hinge lugs 58b of the structural fitting 38 of the outboard wing section 14, and the aft hinge lugs 60 of the structural fitting 18 of the fixed wing 12 are connected to the aft hinge lugs 60b of the structural fitting 38 of the outboard wing section 14, for rotation relative to one another via the fore and aft hinge pins 62, 64 which pass through the holes formed in the hinge lugs 58, 60.

The hinge assembly 52 also comprises a geared rotary actuator (GRA) 66. The GRA 66 is located along the hinge axis 56 and is centrally positioned (along the hinge axis 56) between the fore and aft sets of interleaving hinge lugs 58, 60.

The GRA 66 has a rotary input (not shown) which drives a planetary gearbox within the GRA (not shown). The GRA 66 has a series of stages, alternately connected to either the fixed wing 12 or the outboard wing section 14 (or more specifically, connected to the structural fittings 18, 38 thereof). The rotary input drives rotation of the stages coupled to the outboard wing section 14 thereby rotating the outboard wing section 14 about the hinge axis 56 and towards the ground configuration. In the first embodiment of the invention, the rotational axis of the GRA 66 is coaxial with the hinge axis 56. This arrangement avoids the need for a clevis, strut, or intermediate bracket between the output of the GRA 66 and the outboard wing section 14, thereby reducing the space required for the folding wing.

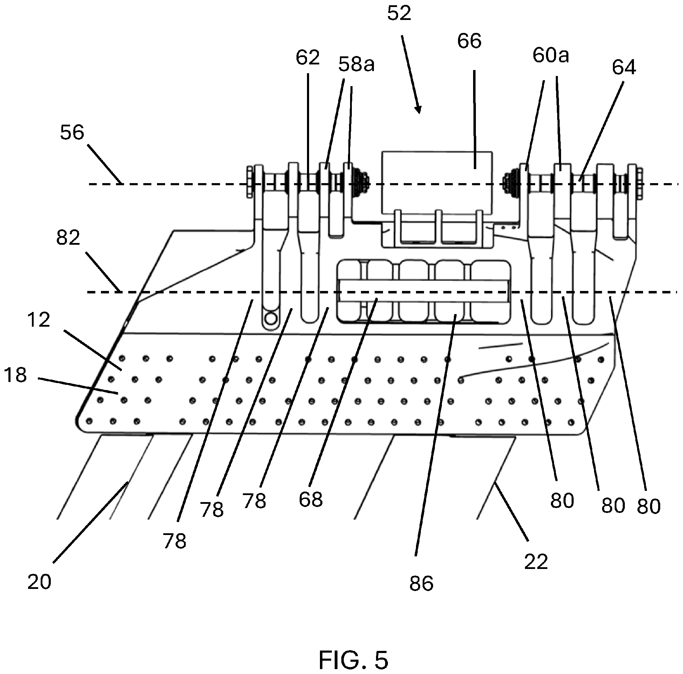

The first embodiment of the invention also comprises a latch assembly 68. The latch assembly 68 is arranged to selectively allow or prevent the movement of the wing between the flight and ground configurations, by retracting or extending a pair of latch pins 70, 72 into latching lugs associated with the fixed wing 12 and outboard wing section. This will now be described in detail with reference to Figures 3a, 3b and 4, and also Figures 5 to 7.

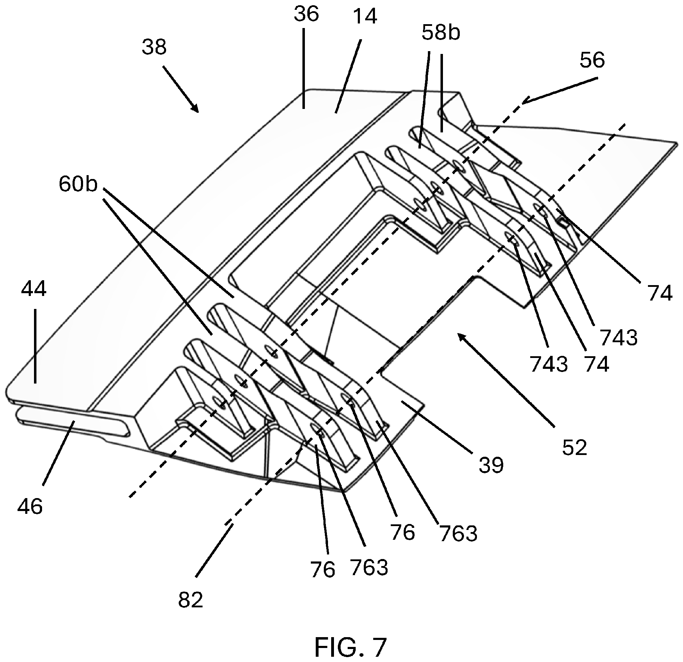

The outboard wing section 14 comprises a pair of fore outboard latching lugs 74 and a pair of aft outboard latching lugs 76. Each of the outboard latching lugs in the fore and aft pairs 74, 76 are integrally formed as an extension of corresponding fore hinge lugs 58b or aft hinge lugs 60b of the structural fitting 38 of the outboard wing section 14. As can be best seen in Figure 7, the outboard latching lugs 74, 76 are integrally formed with the lower wing skin 39 provided by second structural fitting 38 and extend in a perpendicular direction away from the lower wing skin 39. Each of the outboard latching lugs 74, 76 is provided with a hole 743, 763.

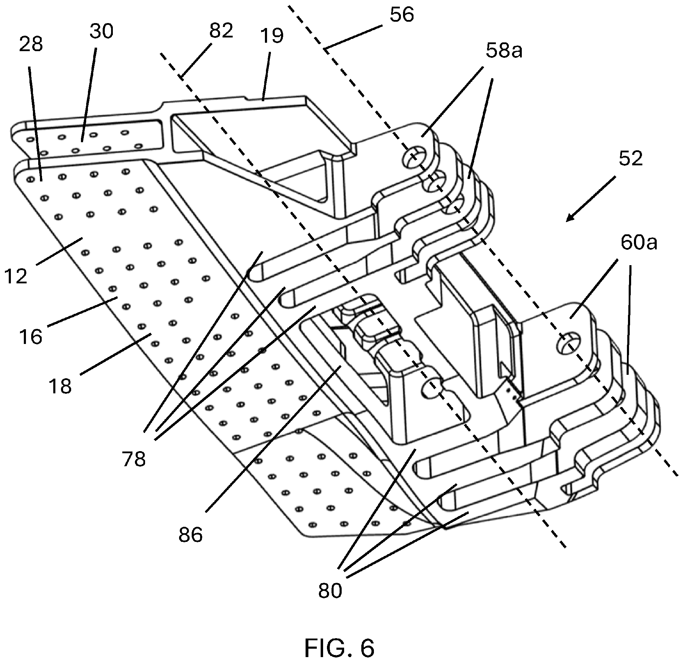

When the wing is in the flight configuration (see Figures 3a and 4), the fore and aft outboard latching lugs 74, 76 extend inboard from the hinge axis 56. The outboard latching lugs 74, 76 interleave with a corresponding series of fore and aft inboard latching lugs 78, 80 associated with the fixed wing 12. As most clearly visible in Figures 5 and 6, the structural fitting 18 of the fixed wing 12 comprises three fore inboard latching lugs 78 and three aft inboard latching lugs 80. Each of the respective inboard latching lugs 78, 80 is integrally formed as an extension of corresponding fore and aft hinge lugs 58a, 60a of the first structural fitting of the fixed wing 12. The inboard latching lugs 78, 80 are integrally formed with the upper wing skin 19 provided by first structural fitting 18 and extend in a perpendicular direction away from the lower wing upper wing skin 19. As can be seen in Figure 4, each of the inboard latching lugs 78, 80 is provided with a hole 783, 803.

When the wing is in the flight configuration (see Figures 3a and 4), each of the outboard latching lugs in the pairs of outboard latching lugs 74, 76 are sandwiched between two corresponding inboard latching lugs 78, 80. Each of the outboard latching lugs 74, 76 and the inboard latching lugs 78, 80 are formed with a hole 743, 863, 783, 803, said holes 743, 863, 783, 803 of the respective latching lugs align along a common axis 82 when the wing is in the flight configuration. The common axis 82, which may also be referred to herein as the latch line, extends parallel to, but inboard of, the hinge axis 56. In the first embodiment, the latch line is located 270mm inboard of the hinge axis 56.

The latch assembly 68 is in the form of a cylindrical locking and latching unit (LLU) housed in a recess 86 within the first structural fitting 18 (the recess being most clearly visible in Figure 6). The LLU 68 comprises a fore latch pin 70, deployable in the forward direction, and an aft latch pin 72, deployable in an aft direction. The fore latch pin 70 is moveable between a retracted position and an extended position. In the retracted position (shown in Figure 5) the pin 70 is retracted into a pin housing such that the pin is fully withdrawn aft of the fore pair of outboard latching lugs 74 and the fore inboard latching lugs 78. In the extended position (see Figure 3a and 4) the pin 70 has been deployed in a forward direction such that it extends through the aligned holes 743, 783 of the fore sets of outboard latching lugs 74 and inboard latching lugs 78. The aft latch pin 72 is also moveable between a retracted position and an extended position. In the retracted position, the pin 72 is fully withdrawn fore of the aft pair of outboard latching lugs 76 and the aft inboard latching lugs 80.

The retracted position of the latch pins 70, 72 allows for relative movement between the outboard latching lugs 74, 76 and the inboard latching lugs 78, 80. This therefore allows movement of the wing between the flight and ground configurations via actuation of the GRA 66. In contrast, when the pins 70, 72 are in the extended position, the pins inhibit the movement between the outboard latching lugs 74, 76 and the respective inboard latching lugs 78, 80, thereby latching the wing in the flight configuration and transferring loads across the joint and into the fixed wing structure.

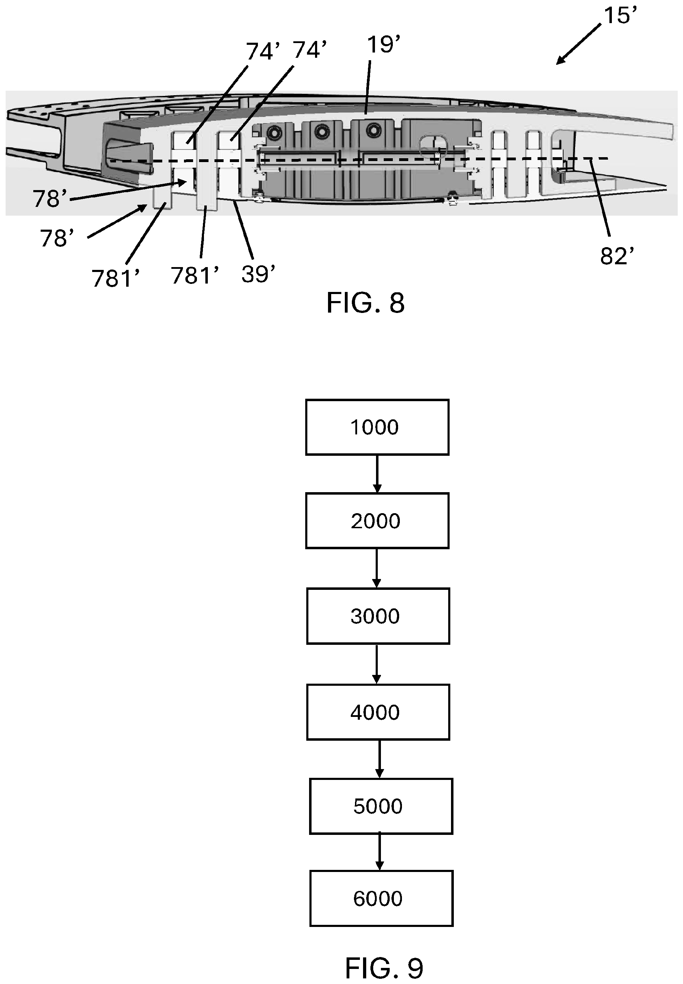

The outboard latching lugs 74, 76 and inboard latching lugs 78, 80 must be appropriately dimensioned to meet minimum strength criteria in order to safely carry the stresses associated with transferring the aerodynamic loads experienced by the outboard wing section 14 across the joint assembly 15 and into the fixed wing 12 during flight. However, during design of the aircraft wing 10, it may be found that required lug dimensions result in the lugs protruding beyond an already determined optimal outer mold line (OML) to which the wing is being designed. This situation is illustrated in Figure 8, which depicts a joint assembly 15' of an aircraft wing similar to the aircraft wing 10 described above in which the required depth of the inboard latching lugs 78' results in the inboard latching lugs 78' having portions 781' which protrude beyond the lower wing skin 39', which has been designed to conform with already established OML (it should be noted that the protruding portions 781' are shown as having square ends for the purposes of illustration only and it will be appreciated that the ends of the latching lugs 78' may be appropriately shaped to avoid including any unnecessary excess material). In order to accommodate the protruding portions 781' of the inboard latching lugs 78' within the wing skin, a modified OML is determined in a method according to an embodiment of the present invention, which is illustrated in Figure 9.

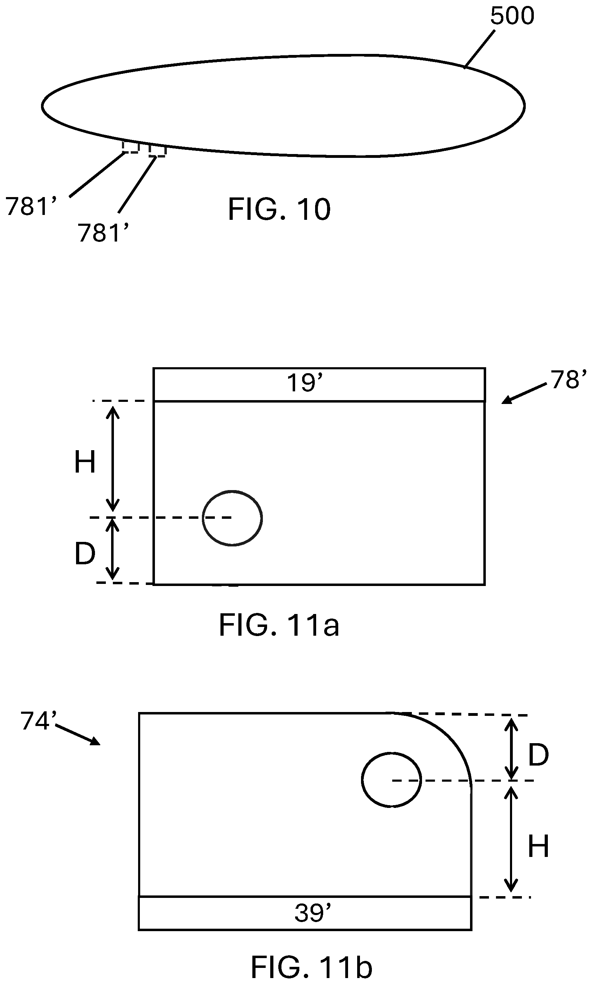

In a step 1000, an initial outer mold line (OML) 500 for the aircraft wing is established. As can be seen in Figure 10, the initial OML 500 (represented by the solid line 500 in Figure 10) has an aerofoil profile.

In a step 2000 the desired dimensions of the respective inboard and outboard latching lugs 78', 74' are determined. The desired dimensions of the respective latching lugs are at least equal to the minimum dimensions required for the latching lugs to meet minimum strength criteria in order to safely carry the stresses experienced by the latching lugs during flight. With reference to Figure 11a, which schematically illustrates one of the inboard latching lugs 78' extending from the upper wing skin 19', and Figure 11b, which schematically illustrates one of the outboard latching lugs 74' extending from the lower wing skin 39', the determined dimensions include a lug depth D which must be sufficient for the lug to meet the required strength criteria. As described above, the respective latching lugs 74', 78' are integrally formed with and extend away from the either the upper wing skin 19' or the lower wing skin 39'. The determined dimensions therefore also include the height H that the hole of each respective lug must be positioned away from the respective wing skin 19', 39' in order for the respective holes to align along the latch line 82'.

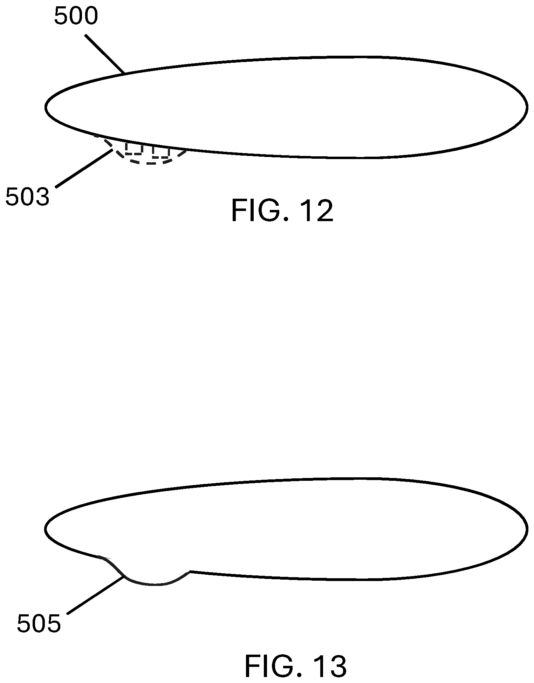

Where the latching lugs having the desired dimensions comprise portions 781' which protrude beyond the initial OML 501, the amount by which those protrusions protrude beyond the initial OML is quantified in a step 3000. In a subsequent step 4000, the initial OML is modified in the region of the protruding portions 781' of the latching lugs to create a modified region 503 of the initial OML, which is illustrated in Figure 12. In the modified region 503 of the initial OML, the OML deviates from the aerofoil cross-section in order for the OML to accommodate the protruding portions 781' of the latching lugs.

A modified OML 505, which is shown in Figure 13, is then established by incorporating the modified region 503 of the OML with the initial OML 500 such that the modified OML 505 deviates from the aerofoil cross-section of the initial OML 500 only in the region of the latching lug protrusions 501.

In the present example, the modified OML 505 deviates from the initial OML only in the region where the inboard latching lugs 78' protrude beyond the wing lower skin 39', which conforms to the initial OML 500. As such the lower wing skin 39' must be moved downwardly to conform with the modified OML 505 and envelop the protruding portions 781' of the inboard latching lugs 78'. Moving the lower wing skin 39' downwardly corresponds to moving the lower wing skin 39' away from the latch line 82'. Because the opposing outboard latching lugs 74' are integrally formed with and extend towards the latch line 82' from the lower wing skin 39', the height H of the outboard latching lugs 74' must be adjusted when the lower wing skin 39' is moved downwardly in order to maintain the respective holes of the outboard latching lugs 74' at the latch line 82'. Therefore, in a step 5000, the height H of the opposing outboard latching lugs 74' is determined, the determined height being the height required for the holes of the respective outboard latching lugs 74' to be maintained at the latching line 82' in the modified OML.

In a step 6000, the aircraft wing 10 is then manufactured with the latching lugs 74', 78' having the desired depths and heights and the modified OML such that the lower wing skin 39' encompasses the inboard latching lugs 78', and such that the respective holes of the latching lugs 74', 78' are aligned along the latch line 82'.

Whilst the present invention has been described and illustrated with reference to particular embodiments, it will be appreciated by those of ordinary skill in the art that the invention lends itself to many different variations not specifically illustrated herein. For example, while in the example described above an aft inboard latching lug protrudes beyond the initial OML when having the desired depth, in other embodiments it may be a fore latching lug that protrudes beyond the initial OML, or it may be a latching lug (fore or aft) associated with the outboard wing section that protrudes beyond the initial OML. It will be understood that the method according to the invention can be used in these scenarios to determine a modified OML and subsequently manufacture an aircraft wing having the said modified OML in which any protrusions beyond the initial OML are accommodated within the wing skin of the wing having the modified OML.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

The term 'or' shall be interpreted as 'and/or' unless the context requires otherwise.

## Claims

1. A method of manufacturing an aircraft wing, the aircraft wing comprising:
a fixed wing;
an outboard wing section outboard of the fixed wing; and
a hinge assembly connecting the outboard wing section to the fixed wing,
wherein,
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein,
the hinge assembly comprises:
a latching lug associated with one of the outboard wing section or the fixed wing and a latch pin configured such that, when the wing is in the flight configuration, the latch pin is deployable through the latching lug to latch the outboard wing section to the fixed wing,
wherein the method comprises:
- establishing an initial outer mold line (OML) for the aircraft wing;
- determining a desired depth of the latching lug, the desired depth being at least equal to the required minimum depth of the latching lug for the latching lug to meet a strength requirement;
- determining the protrusion beyond the initial OML of the latching lug having the desired depth,
- establishing a modified OML by modifying the initial OML in the region of the latching lug protrusion, the modified OML being arranged to envelop the latching lug having the desired depth; and
- manufacturing the aircraft wing comprising the latching lug having the desired depth, the aircraft wing being manufactured to have the modified OML.

2. The method of claim 2, wherein the initial OML has an aerofoil cross-section, the modified OML therefore deviating from the aerofoil cross-section only in the region of the latching lug protrusion.

3. The method of claim 1 or claim 2, wherein the step of manufacturing the aircraft wing comprises providing a wing skin that envelops the latching lug.

4. The method of claim 3, wherein the wing skin comprises an upper wing skin portion and a lower wing skin portion, the upper wing skin portion forming part of the one of the outboard wing section or the fixed wing and the lower wing skin forming part of the other one of the outboard wing section or the fixed wing; and only one of the upper wing skin portion or the lower wing skin portion conforms to the shape of the initial OML.

5. The method of any preceding claim, wherein the aircraft wing comprises an opposing latching lug, the opposing latching lug being associated with the other one of the outboard wing section or the fixed wing and provided with a hole spaced apart from a wing skin portion of other one of the outboard wing section or the fixed wing by a height such that, when the wing is in the flight configuration, the hole of the opposing latching lug is aligned with a corresponding hole provided in the latching lug and the latch pin is deployable through the respective holes of the latching lug and the opposing latching lug to latch the outboard wing section to the fixed wing, and wherein the method comprises:
- determining the height of the hole of the opposing latching lug required for the hole of the opposing latching lug to align with the hole of the latching lug in the modified OML;
- manufacturing the aircraft wing further comprising the opposing latching lug having the hole provided at the height required for the respective holes of the respective latching lugs to align in the flight configuration of the wing.

6. The method of claim 5, wherein manufacturing the aircraft wing comprises integrally forming the opposing latching lug and the wing skin portion of the other one of the outboard wing section or the fixed wing.

7. The method of claim 6, wherein the opposing latching lug extends from the wing skin portion of the other one of the outboard wing section or the fixed wing section in a region where the modified OML differs from the initial OML.

8. The method of any preceding claim, wherein the latching lug is an inboard latching lug associated with the fixed wing, the inboard latching lug extending downwardly from an upper wing skin portion on the fixed wing.

9. The method of any of claims 1 to 7, wherein the latching lug is an outboard latching lug associated with the outboard wing section, the outboard latching lug extending upwardly from the lower wing skin on the outboard wing section.

10. The method of any preceding claim, wherein the aircraft wing comprises a leading edge and a trailing edge, and the latching lug is positioned closer to the trailing edge than the leading edge.

11. The method of any preceding claim, wherein the aircraft wing further comprises a joint assembly, the joint assembly comprising the hinge assembly and the joint assembly further comprising an inboard structural fitting fixedly connected to a tip of the fixed wing and an outboard structural fitting fixedly connected to the outboard wing section; wherein the latching lug forms part of one of inboard structural fitting or the outboard structural fitting; and the step of manufacturing the aircraft wing comprises manufacturing the joint assembly.

12. A method of manufacturing an aircraft wing, the aircraft wing comprising:
a fixed wing;
an outboard wing section outboard of the fixed wing; and
a hinge assembly connecting the outboard wing section to the fixed wing,
wherein,
the aircraft wing is configurable between:
(iii) a flight configuration for use during flight and
(iv) a ground configuration for use during ground-based operations, in which ground configuration the outboard wing section is rotated away from the flight configuration about a hinge axis of the hinge assembly, such that the span of the aircraft wing is reduced,
wherein,
one of the outboard wing section or the fixed wing comprises a latching lug configured such that a latch pin can be deployed through the latching lug to secure the outboard wing section in the flight configuration,
wherein the method comprises:
- defining an outer mold line (OML) for the aircraft wing;
- calculating the dimensions of the latching lug required for the latching lug to meet minimum strength criteria;
- modifying the OML to encompass the latching lug having the dimensions required to meet the minimum strength criteria; and
- manufacturing the aircraft wing having the latching lug having the dimensions required to meet the minimum strength criteria to within the modified OML.

13. An aircraft wing, comprising:
a fixed wing; and
an outboard wing section outboard of the fixed wing; and
the aircraft wing is configurable between:
(i) a flight configuration for use during flight and
(ii) a ground configuration for use during ground-based operations, in which ground configuration the outboard wing section is rotated away from the flight configuration about a hinge axis of the hinge assembly, such that the span of the aircraft wing is reduced,
wherein the wing further comprises a latch assembly located in the fixed wing and a set of latching lugs,
the latch assembly and the latching lugs being configured such that when the wing is in the flight configuration, the latching lugs extends fore and aft of the latch assembly such that the latch assembly is between the latching lugs, and wherein
in the flight configuration, at least one latching lug protrudes beyond an aerofoil-profiled outer mold line (OML) of the aircraft wing and is encompassed by a modified OML that deviates from the aerofoil-profiled OML, and
wherein the modified OML is defined by the wing skin, said wing skin in the modified OML being integral with surrounding wing skin following the aerofoil-profiled OML.

14. An aircraft comprising the aircraft wing of claim 13.
